# EUROPEAN PATENT APPLICATION

(11) **EP 1 507 342 A2**
(43) Date of publication of application: **16.02.2005**
(21) Application number: 04251252.5
(22) Date of filing: 04.03.2004
(51) Int. Cl.: H04B 7/185

(54) **Method and system for providing dynamic timing and power validation in a two-way satellite network**

(30) Priority: 12.08.2003 US 639558
(71) Applicant: Hughes Electronics Corporation, El Segundo, CA 90245 (US)
(72) Inventor: Kelley, Frank M., Walkersville, MA 21793 (US)
(74) Representative: Jackson, Richard Eric

(57) **Abstract**

An approach for supporting dynamic timing and power validation in a two-way satellite network (100) is provided. A satellite terminal (103, 105, 107), under a normal operational mode, transmits a burst to a hub station (109) via a return channel (inroute) of the satellite network (100), wherein the hub station (109) dynamically determines a timing offset value to account for drift of the satellite and measures a power level of the burst. The hub station (109) transmits a control signal to the satellite terminal (103, 105, 107) instructing adjustment for timing based on the determined timing offset value and power level based on the measured power level. This approach advantageously ensures proper operation of the satellite terminal (103, 105, 107) without disrupting normal operation.

## Description

### FIELD OF THE INVENTION

The present invention relates generally to a radio communications system, and is more particularly related to validation of satellite terminal operation in a two-way satellite communication system.

### BACKGROUND OF THE INVENTION

Modem satellite communication systems provide a pervasive and reliable infrastructure to distribute voice, data, and video signals for global exchange and broadcast of information. These satellite communication systems have emerged as a viable option to terrestrial communication systems. As the popularity of the Internet continues to grow in unparalleled fashion, the communication industry has focused on providing universal access to this vast knowledge base. Satellite based Internet service addresses the problem of providing universal Internet access in that satellite coverage areas are not hindered by traditional terrestrial infrastructure obstacles. Unlike terrestrial networks, satellite communication systems are susceptible to service disruptions stemming from changing channel conditions, such as fading because of weather disturbances.

The Internet has profoundly altered the manner society conducts business, communicates, learns, and entertains. New business models have emerged, resulting in the creation of numerous global businesses with minimal capital outlay. Traditional business organizations have adopted the Internet as an extension to current business practices; for example, users can learn of new products and services that a business has to offer as well as order these products by simply accessing the business's website. Users can communicate freely using a wide variety of Internet applications, such as email, voice over IP (VoIP), computer telephony, and video conferencing, without geographic boundaries and at nominal costs. Moreover, a host of applications within the Internet exist to provide information as well as entertainment.

Satellite communication systems have emerged to provide access to the Internet. However, these traditional satellite-based Internet access systems support unidirectional traffic over the satellite. That is, a user can receive traffic from the Internet over a satellite link, but cannot transmit over the satellite link. The conventional satellite system employs a terrestrial link, such as a phone line, to send data to the Internet. For example, a user, who seeks to access a particular website, enters a URL (Universal Resource Locator) at the user station (e.g., PC); the URL data is transmitted over a phone connection to an Internet Service Provider (ISP). Upon receiving the request from the remote host computer where the particular website resides, the ISP relays the website information over the satellite link.

The above traditional satellite systems have a number of drawbacks. Because a phone line is used as the return channel, the user has to tie up an existing phone line or acquire an additional phone line. The user experiences temporary suspension of telephone service during the Internet communication session. Another drawback is that the set-top box has to be located reasonably close to a phone jack, which may be inconvenient. Further, additional costs are incurred by the user. The conventional satellite systems also cannot automatically adapt to varying channel conditions to efficiently utilize system resources. For example, a temporary rain storm may require greater transmission power from the satellite terminals to maintain service; without the necessary adjustment to the level of transmission power, system availability suffers.

Based on the foregoing, there is a clear need for improved approaches for increasing system availability in light of changing channel conditions of a radio communications system, such as a satellite network. Therefore, an approach for providing access to a packet switched network, such as the Internet, over a two-way satellite communication system with improved system availability is highly desirable.

### SUMMARY OF THE INVENTION

The present invention addresses the above stated needs by providing a mechanism for automatically adjusting timing and power levels of satellite terminals in a two-way satellite communication system. In the course of normal operation, the satellite terminals transmit bursts to a hub station over a return channel. The hub station (or any other designated satellite terminal) receives the transmission bursts and determines timing and power levels of the corresponding satellite terminals based on these received bursts. The hub station automatically generates control messages to the satellite terminals for selective adjustment of the timing to account for satellite drift and power level for compensating for varying weather conditions. The above arrangement advantageously enhances efficient use of system resources and increases system availability.

According to one aspect of an embodiment of the present invention, a method for providing timing validation of a satellite terminal in a two-way satellite network is disclosed. The method includes receiving a transmission burst from the satellite terminal during normal operation via a return channel over the network. The method also includes dynamically determining a timing offset value. Further, the method includes generating a control signal instructing the satellite terminal to adjust for timing based on the determined timing offset value.

According to another aspect of an embodiment of the present invention, a hub station for providing timing validation of a satellite terminal in a two-way satellite network is disclosed. The hub station includes a receiver configured to receive a transmission burst from the satellite terminal during normal operation via a return channel over the network. Also, the hub station includes timing logic configured to dynamically determine a timing offset value, wherein a control signal is generated for instructing the satellite terminal to adjust for timing based on the determined timing offset value.

According to another aspect of an embodiment of the present invention, a system for supporting dynamic timing validation in a two-way satellite network including a satellite terminal is disclosed. The system includes means for receiving a transmission burst from the satellite terminal within the two-way satellite network over a return channel, wherein the satellite terminal is under a normal operational mode. The system also includes means for dynamically determining a timing offset value to account for satellite drift; and means for generating a control signal instructing the satellite terminal to adjust for timing based on the determined timing offset value.

In yet another aspect of an embodiment of the present invention, a method for supporting dynamic timing and power validation in a two-way satellite network including a hub station in communication with a satellite is disclosed. The method includes transmitting, under a normal operational mode, a burst to the hub station via an inroute of the satellite network, wherein the hub station dynamically determines a timing offset value to account for drift of the satellite and measures a power level of the burst. The method also includes receiving a control signal from the hub station instructing adjustment for timing based on the determined timing offset value and power level based on the measured power level.

Still other aspects, features, and advantages of the present invention are readily apparent from the following detailed description, simply by illustrating a number of particular embodiments and implementations, including the best mode contemplated for carrying out the present invention. The present invention is also capable of other and different embodiments, and its several details can be modified in various obvious respects, all without departing from the spirit and scope of the present invention. Accordingly, the drawing and description are to be regarded as illustrative in nature, and not as restrictive.

### BRIEF DESCRIPTION OF THE DRAWINGS

The present invention is illustrated by way of example, and not by way of limitation, in the figures of the accompanying drawings and in which like reference numerals refer to similar elements and in which:

FIG. 1 is a diagram of a satellite communication system capable of dynamically validating timing and power of satellite terminals, in accordance with an embodiment of the present invention;

FIG. 2 is an exemplary satellite terminal utilized in the system of FIG. 1;

FIG. 3 is a flow chart of a process for dynamically providing timing and power validation, according to an embodiment of the present invention;

FIG. 4 is diagram of a hub station for supporting dynamic power and timing validation in the system of FIG. 1; and

FIG. 5 is a diagram of an inroute timing and power loop executed by the satellite terminal of FIG. 2; and

FIG. 6 is a diagram of a computer system that is capable of supporting dynamic power and timing validation, according to an embodiment of the present invention.

### DESCRIPTION OF THE PREFERRED EMBODIMENT

A system, method, and software for supporting verification and validation of timing and power of satellite terminals in a two-way satellite communication network is described. In the following description, for the purposes of explanation, numerous specific details are set forth in order to provide a thorough understanding of the present invention. It is apparent, however, to one skilled in the art that the present invention may be practiced without these specific details or with an equivalent arrangement. In other instances, well-known structures and devices are shown in block diagram form in order to avoid unnecessarily obscuring the present invention.

Although the present invention is described with respect to a satellite communication system that supports data networking, it is recognized by one of ordinary skill in the art that the present invention has applicability to other radio communication systems.

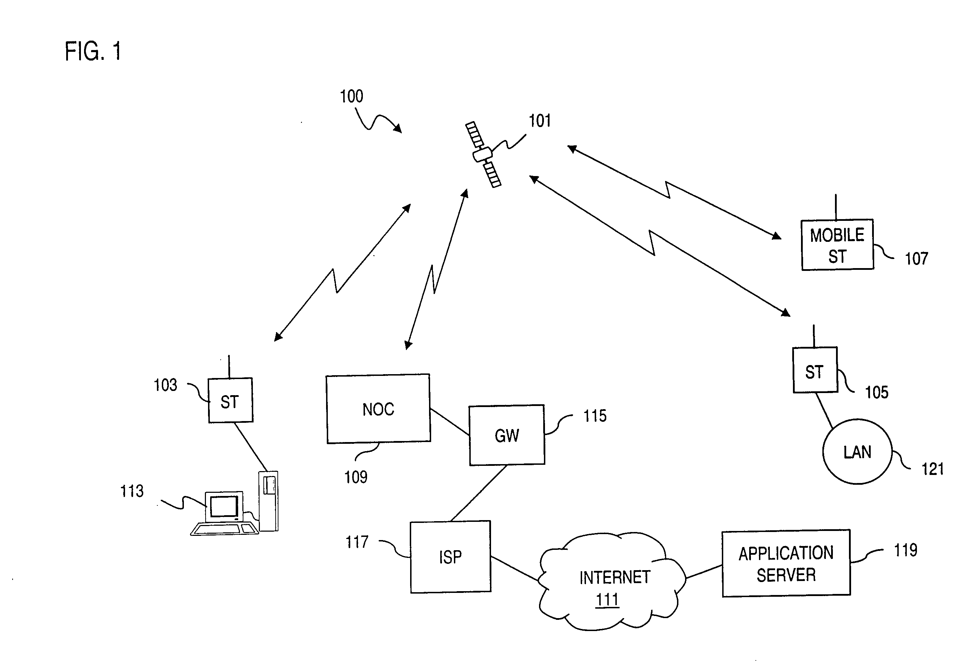

FIG. 1 is a diagram of a satellite communication system capable of dynamically validating timing and power of satellite terminals, in accordance with an embodiment of the present invention. A satellite communication system 100 utilizes a satellite 101 to transmit information to satellite terminals (STs) 103, 105, 107, and a Network Operations Center (NOC) 109 bi-directionally (i.e., two-way). As used herein, the terms "return channel", "inroute", and "uplink channel" are synonymously used to denote a communication channel established via the satellite 101 to transport from the STs 103, 105, 107 to the NOC 109, and the terms "receive channel", "outroute" and "downlink channel" refer to a communication channel carrying traffic from the NOC 109 to the STs 103, 105, 107. In the system 100, the STs 103, 105, 107 originate traffic from a particular coverage area and may exchange data among themselves as well as other STs (not shown). The NOC 109 supports the capability to dynamically adjust timing for satellite drift and power level of the STs 103, 105, 107 to ensure proper operation in an environment that is continually changing (e.g., weather conditions and satellite position). This capability is particularly important to STs that are mobile, such as ST 107. In an exemplary embodiment, the STs 103, 105, 107 are Very Small Aperture Terminals (VSAT), and provide access to a public data network, such as the Internet 111 to hosts (e.g., host 113).

The uplink channel can include multiple carriers, each operating at speeds, for example, of 64kbps, 128kbps, or 256kbps. Each of these carriers is a TDMA (Time Division Multiple Access) stream, which employs several transmission schemes. Upon first use of user equipment, tools may be employed to provide initial access and to request further bandwidth as required. The specific bandwidth allocation scheme may be designed to ensure maximum bandwidth efficiency (i.e., minimal waste due to unused allocated bandwidth), and minimum delay of return channel data. Further, the scheme is be tunable, according to the mixture, frequency, and size of user traffic.

Thus, the system 100 supports a two-way satellite access mechanism to the Internet 111 through the use of TDMA structured inroutes to provide a return channel between the host 113 via the ST 103 and the NOC 109. For example, the system 100 transmits a burst time plan to the terminals 103, 105, 107 every frame. The burst time plan can be limited in size for a specific inroute group on the system 100.

As a hub station, the NOC 109 manages and controls communication services and operations. For example, the NOC 109 provisions and identifies the communication channels that are to be allocated. Additionally, the NOC 109 is responsible for controlling the bandwidth that is made available to the STs 103, 105, 107. The NOC 109 also provides interfaces, such as a gateway 115, to either private Intranets (not shown) or the public Internet 111 via an ISP 117.

The NOC 109 can support multiple receive channels (referred to as outroutes) and multiple return channels; however, the NOC 109 can be configured to provide no return channels, depending on the application. The NOC 109 has connectivity to the Internet 111, and supports a multitude of applications (e.g., software distribution, news retrieval, document exchange, real-time audio and video applications, etc.), which may be supplied directly from a content provider or via the Internet 111. For example, the host 113 of the ST 103 can download content from an application server 119 off the Internet 111. As shown, the ST 105 can interface a local area network (LAN) 121, which can provide connectivity to a multiple hosts (not shown) for accessing the application server 119.

The two-way satellite system 100 can be implemented, according to an exemplary embodiment, based upon a one-way broadcast system. The conventional one-way broadcast system utilizes a terrestrial link for a return channel. In contrast, the two-way satellite system 100 obviates this requirement. However, the user terminal 101 may optionally retain the dial-up connection as a back-up connection to the Internet 111.

The return channels, according to an embodiment of the present invention, may support frequency hopping to provide increased efficiency of system 100. A subset of return channels may be configured to support a contention protocol, such as ALOHA. It should be noted that any equivalent contention protocol may be utilized in system 100. An ST may randomly select a return channel with ALOHA slots. In turn, the NOC 109 may assign the receiver a stream on the same or a different return channel. The NOC 109 may change the frequency for the assigned stream when the site requires additional bandwidth, when another site requires additional bandwidth on the same return channel, or when the site may be used for a poll response on another return channel to keep the NOC 109 locked for the return channel. During normal operation, a return channel (or inroute) is considered locked if at least one burst has been received in the recent past.

In addition to Internet access, the two-way satellite system 100 can offer the following services to the host 113: digital package multicast delivery, and multimedia services. Under the digital package delivery service, the system 100 offers a multicast file transfer mechanism that allows any collection of PC files to be reliably transferred to a collection of transceivers. The IP multicast service carries applications, such as video, audio, financial and news feed data, etc., for broadcast to the transceivers (e.g., 109). As already discussed, the system 100 provides high-speed, cost-effective Internet access.

The architecture of the two-way system 100 is an open architecture, which advantageously affords information (i.e., content) providers control over their content. Specifically, the two-way system 100 provides interfaces to information providers at the NOC 109 and standard Application Programming Interfaces (APIs) on the host 113. The user terminal 101 is loaded with host software and drivers to interface with the transceiver 201 and to control antenna 207.

The two-way system 100 supports the exchange of digital packages to one or more receiving hosts. The term "package", as used herein, refers to any data (including electronic documents, multimedia data, software packages, video, audio, etc.) which can take the form of a group of PC files. Package delivery is used by an information provider to send packages to receiving hosts; for example, the delivery of digitized advertisements to radio and TV stations.

To prepare a package for transmission, a publisher (i.e., content provider) may merge the package's files into a single file using an appropriate file utility (e.g., PKZIP), and subsequently load the package into the NOC 109 using an off-the-shelf file transfer mechanism (e.g., Transmission Control Protocol/ Internet Protocol (TCP/IP) file transfer protocol (FTP)). The publisher may control the following parameters associated with the package: addresses of the destination hosts, and delivery assurance. The low bit error rate and high availability of the two-way system 100 ensures that packages are delivered in one transmission (that is, without the need to retransmit).

With respect to ensuring proper delivery and reporting delivery status of the digital packages, the publisher possesses a number of functionalities. The host 113 may issue retransmission requests, as needed, if segments of the package is loss or received with errors. The host 113 may request retransmission of only the loss or corrupt portions of the digital package via the satellite return channel, or optionally, a dial-out modem. It should be noted that the multicasting capability of the system 100 advantageously permits the one time retransmission of missing/corrupt data even though the missing/corrupt data may affect multiple hosts. The system 100 also supports delivery confirmation. A host 113, after successfully receiving a package, may send a confirmation to a package delivery server (not shown) within the NOC 109. These confirmations are tabulated and provided in the form of reports to the publisher.

Further, the system 100 may provide a best effort service. Under this scenario, if frames are lost on the first transmission, the receiving hosts fill in the gaps on subsequent transmissions. This mechanism helps ensure high probability of delivery without requiring use of a return link for retransmission requests.

According to an exemplary embodiment, the digital packages contain the following fields: a transmission rate field that is configurable per package at speeds up to 4 Mbps; a forward error correction (FEC) rate for providing correction of sporadic packet loss; a priority field for specifying low, medium, or high priority; and optional topic, descriptive name, and description fields that are used by the user interface of the receiver host to present the package to the user. The package delivery service of the two-system 100 supports the simultaneous transmission of several packages and the preemption of lower priority packages to ensure the timely delivery of higher priority packages.

The system 100 also supplies multimedia services, which provide one-way IP multicast transport. The NOC 109 relays a configurable set of IP multicast addresses over the downlink channel. An information provider may pass IP multicast packets to the NOC 109, either via a terrestrial line or via the return channel. The receiving hosts 113 may receive the IP multicast through the standard Winsock with IP Multicast extensions API. To prevent unauthorized access, each IP multicast address may be cryptographically protected. Thus, host 113 may only have access to an address if it has been authorized by the NOC 109. Hardware filtering in the receiver of the ST 103 allows the reception of any number of different IP Multicast addresses.

The NOC 109, which provides network management functions, allocates to each multimedia information provider a committed information rate (CIR), and one or more IP multicast addresses. The CIR specifies the fraction of the broadcast channel bandwidth that is guaranteed to the data feed provider. Each IP Multicast address operates as a separate data stream that is multiplexed on the one broadcast channel.

As mentioned above, the two-way satellite communication system 100 supports access by the host 113 in form of a personal computer (PC). One of ordinary skill in the art would recognize that any type of hosts with appropriate functionalities can be utilized; e.g., personal digital assistants (PDAs), set-top boxes, cellular phones, laptop computing devices, etc.

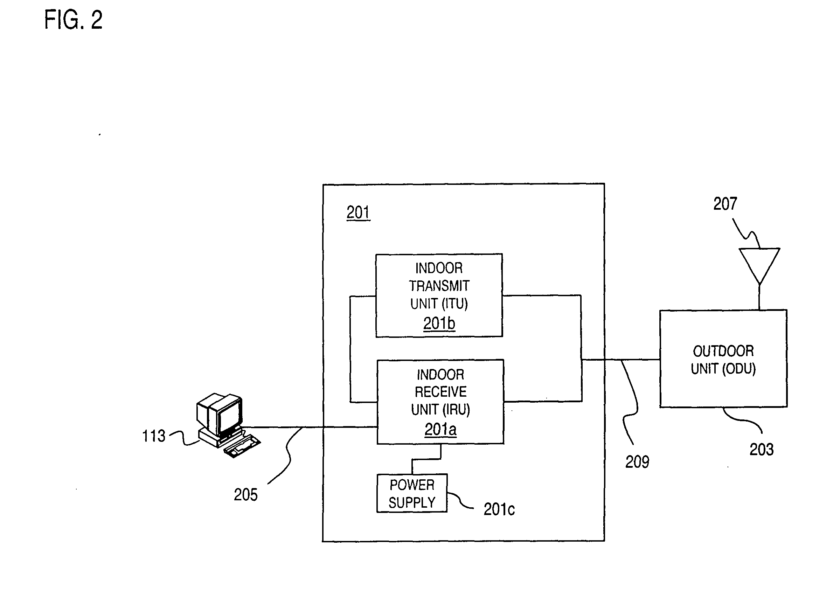

FIG. 2 is an exemplary satellite terminal utilized in the system of FIG. 1. By way of example, the ST 103 has a transceiver 201 that includes an indoor receiver unit (IRU) 201a, an indoor transmitter unit (ITU) 201b for transmitting and receiving data from the network hub 109 - denoted as a network operations center (NOC). The IRU 201a includes logic (not shown) that measures the strength of the receive signals in terms of a signal quality factor, which is used to automatically adjust transmission power level as well as timing. The terminal 103 can transmit data to the NOC 109 with a high-speed return channel, and receive data on the downlink channel of even greater speed.

The transceiver 201 encompasses a number of hardware and software components. A PC host software, which is resident in host 113 and supports the satellite return channel. The transceiver 201 includes IRU 201a, ITU 201b, a power supply 201c, and connects to an Outdoor Unit (ODU) 203. The ODU 203 contains a low noise block (LNB) (not shown), an antenna 207, and a radio (not shown). The IRU 201a operates in the receive-only mode and controls the ITU 201b.

The IRU 201a, in an exemplary embodiment, has a Universal Serial Bus (USB) interface, which is a standard interface to host 113 to provide IRU control and data. The IRU 201a may be attached to the host 113 dynamically, and may be loaded with operational software and initialized by PC driver software. Received traffic is forwarded to the host 113 through a USB connection 205. The PC driver communicates with the IRU 201a for control over the USB channel. By way of example, the receive chain F-connector on an RG-6 cable is connected to the IRU 201a to communicate to the LNB 305. The IRU 201a contains an interface that may be used to transfer data to control the transmit unit and to actually provide the transmit data to the ITU 201b. A clock is received on this channel to ensure that transmit frame timing and transmit symbol clocks are synchronized.

Data is passed from the host 113 to the USB adapter of the host 113, which formats the data for transmission and provides both the control and data for the ITU 201a. The ITU 201a sends the data to the outdoor unit 203 at the appropriate time for the data to be transmitted in TDMA bursts to equipment at the NOC 109. In this example, when averaged across a year, each two-way transceiver is expected to have a bit-error rate less than 10⁻¹⁰ more than 99.5% of the time whereby a single bit error causes the loss of an entire frame.

The IRU 201a can be used as a stand-alone device with the host 113 via the USB interface. One application such application in which only the IRU 201a is required is Digital Video Broadcast (DVB). If a return channel is desired, the IRU 201a can be field upgradable with the addition of the ITU 201b. Thus, the ITU 201b may be a standalone component that externally may appear very similar to the IRU 201a.

According to one embodiment of the present invention, the housings of the IRU 201a and ITU 201b are in a stackable form factor. The ITU 201b has an Inter-Facility Link (IFL) interface (not shown) that attaches to the ODU 203 via an RG-6 interface (not shown). Control information and data from the ITU 201b are multiplexed onto the IFL cables 209 to the ODU 203. One IFL cable 209 may handle the receive patch and the other may handle the transmit path.

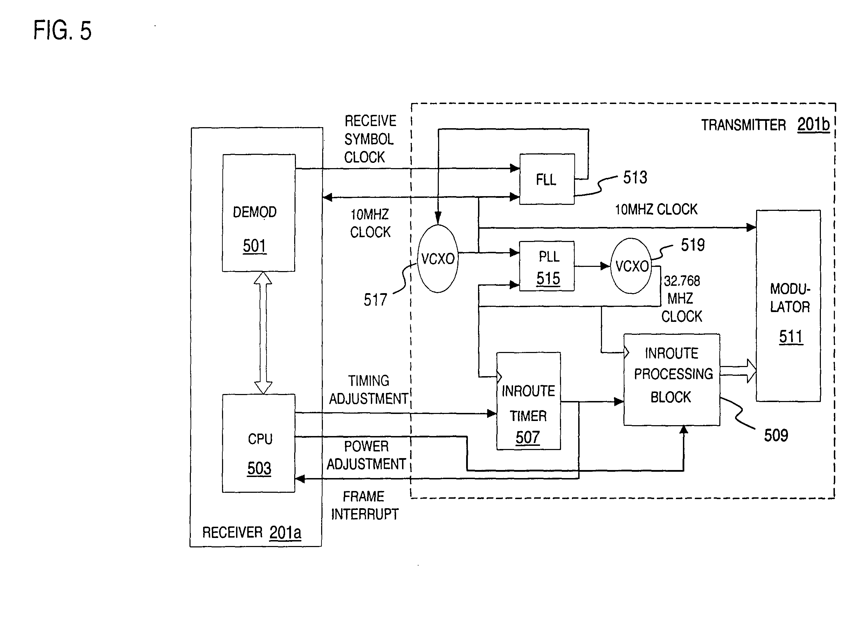

The ITU 201b also includes an ITU control interface for data transfer. In addition, a pulse is received over the ITU control interface to ensure that transmit frame timing and transmit symbol clocks are properly synchronized. The ITU 201b may contain an RF transmitter, low phase noise oscillator, and serial data transceiver (as more fully described with respect to FIG. 5). ITU 201b modulates and transmits, in bursts utilizing in-bound carriers at, for example, rates of 64kbps or 128kbps.

The ITU 201b may be designed to operate with and to be controlled by the IRU 201a. Although IRU 201a and ITU 201b are shown as distinct components, IRU 201a and ITU 201b may be integrated, according to an embodiment of the present invention. By way of example, a single DB-25 connector on the rear panel provides power, ground and a serial data link via which control of the transmitter is exercised. The ITU 201b may be considered a peripheral to the IRU 201a. Configuration parameters and inbound data from the IRU 201a may be input to the serial port (not shown); in addition, transmitter status information to the IRU 201a may output from the serial port.

The IRU 201a and ITU 201b utilize dual IFL cables 209 to connect to the LNB of the ODU 203 for receiving signals from the satellite 101. Each cable 209 may carry the necessary power, data, and control signals from the IRU 201a and ITU 201b to the LNB, which is mounted on the antenna 207.

The transceiver 201 supports a variety of features that enhance the flexibility and efficiency of the two-way system 100. Transceiver 109 can be implemented as a receive-only unit that can be later upgraded to support a two-way configuration. In other words, the transceiver 201 may be configured either as a receive-only package or a transmit upgrade package. The transceiver 201 may be designed to be an add-on capability to a standard receive-only transceiver. Thus, in actual implementation, a user can either purchase an upgrade to a transceiver 201 to support a satellite-based return channel or can operate a receiver with no transmit portion for communication over the satellite 101. Such a receive-only system may employ a terrestrial return channel (e.g., phone line) for two-way IP traffic.

In addition, the transceiver 201 supports multiple rate, high speed, receive channel. The transceiver 201 can support for high speed TCP/IP applications using, for example, Turbo Internet™ TCP spoofing. In an exemplary embodiment, a standard USB interface to host 113 is used to connect the host 113 with the IRU 201a. However, it is recognized that any type of interface can be utilized (e.g., serial, parallel, Personal Computer Memory/ Card International Association (PCMCIA), Small Computer System Interface (SCSI), etc.). The transceiver 201 supports TCP/IP applications (e.g., web browsing, electronic mail and FTP) and multimedia broadcast and multicast applications using IP Multicast (e.g. MPEG-1 and MPEG-2 digital video, digital audio and file broadcast) to host 113 per the USB adapter connection 205. The transceiver 201 can also support IP multicast applications (e.g., MPEG video and package delivery). Further, the transceiver 201 can provide compression of receive and return channel traffic to enhance bandwidth efficiency.

The transceiver 201 integrates the capabilities of the broadband receiver via satellite with the capability for a satellite return channel through the use of IRU 201a and ITU 201b. The IRU 201a is powered by power supply 201c. As indicated previously, the received channel to the transceiver 201 may be a DVB transport stream that contains multiprotocol-encapsulated IP traffic. A group of multiple transmit channels may be shared among several DVB transport streams.

Further, the transceiver 201, unlike conventional satellite systems, is controlled at the system level by the NOC 109. Particularly, the NOC 109 has the capability to enable and disable the operation of the ITU 201b, thereby making it difficult for an authorized user to access the satellite system 100. Neither the transceiver 201 nor the connected PC-based host 113 has the capability to override commands from NOC 109, even in the case in which the equipment is powered down and restarted. Once disabled, the ITU 201b can only be enabled by the NOC 109. That is, the user cannot "re-enable" a disabled ITU 201b, even through a power reset. Additionally, the NOC 109 may instruct the ITU 201b to transmit a test pattern at a predetermined frequency. This process may not be overridden by the user, who has no capability to cause the generation of the test pattern. The user has no control over the frequency that the test pattern is sent. Thus, the above system-level control of the ITU 201 b by the NOC 109 prevents users from utilizing the resources of the satellite system 100.

As previously mentioned, the two-way system 100 provides high-speed Internet access, in which the host 113 can connect to the Internet 111. In one embodiment of the present invention, the access is asymmetric, whereby the downlink channel from the NOC 109 to the user terminal 101 can be an order of magnitude greater that the uplink (or return channel). The host 113, in an exemplary embodiment, runs the following operating systems: Microsoft® Windows XP. The PC software may provide instruction and support for installation and antenna pointing (including automatic registration and configuration), package delivery, and drivers that are used by the native TCP/IP (Transmission Control Protocol/ Internet Protocol) stack to support standard applications -- including Winsock API with multicast extensions and web browsers.

The host 113 also utilizes an NDIS (Network Device Interface Specification) device driver to operate with the native TCP/IP stack for Microsoft® Windows. When the ITU 201b is active and enabled, the NDIS software sends the return channel data to the IRU 201a, which in turn supplies the data to the ITU 201b. However, when the ITU 201b is inactive, the packets may be alternatively sent to a dial-up interface. The two-way system 100 allows operation of the standard Internet applications; for example, Netscape® browser, Microsoft® Internet Explorer browser, email, NNTP Usenet News, FTP, GOPHER, etc.

For broadcast applications, the system 100 uses a Ku- (or Ka-) band transponder to provide up to a 45 Mbps DVB-compliant broadcast channel from the NOC 109. Further, data encryption standard (DES) encryption-based conditional access can be utilized to ensure that the host 113 may only access data that the host 113 is authorized to receive.

Irrespective of the application, the satellite terminals 103, 105, 107 can automatically, on a continual basis, adjust for timing and power, as next described.

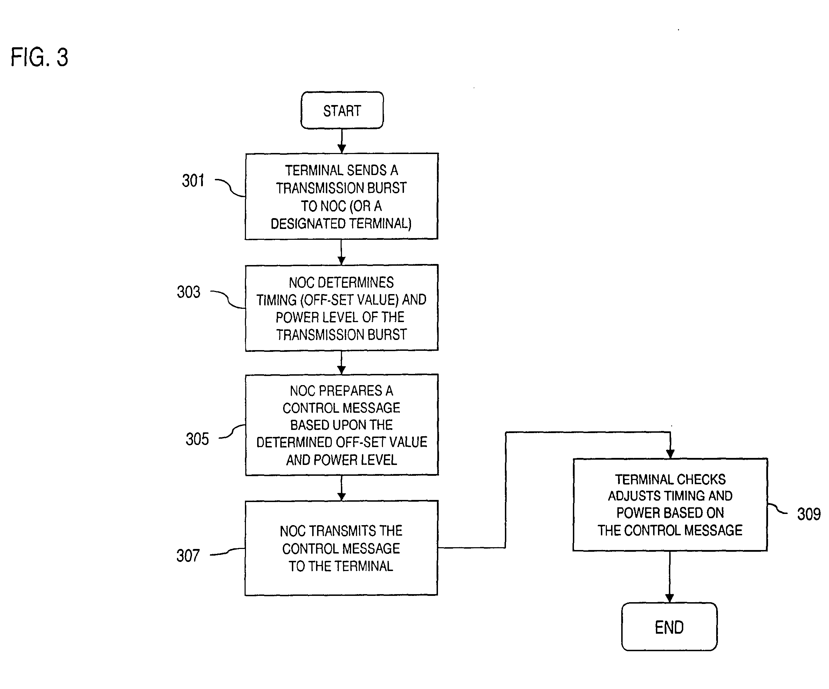

FIG. 3 is a flow chart of a process for dynamically providing timing and power validation, according to an embodiment of the present invention. The system 100 provides a closed-loop control process to continually measure timing and power to adjust operation of the terminals. This closed-loop control process is executed under normal operation; that is, no special mode of operation (e.g., test mode) is needed to conduct timing and power control.

The system 100, in an exemplary embodiment, exhibits a star topology with respect to the manner in which the signals are measured. That is, the measurement of the signals is through a central component (i.e., the NOC 109); under such an arrangement, the terminal does not receive its transmitted carrier. Unlike conventional approaches, which use manual adjustment techniques by periodically testing the terminals, the process of FIG. 3 is an automated procedure that may occur whenever data is received by the NOC 109 from the terminal. For the purposes of explanation, the process is described such that the NOC 109 performs signal measurements to provide feedback to the terminal to adjust transmission power; however, it is recognized that the measurements may be performed by a designated terminal.

During the course of normal operation in support of an application, such as a user browsing the World Wide Web over the Internet 111, the host 113 requires transmitting data over a return channel supported by the satellite 101 to the NOC 109. Per step 301, the terminal 103, thus, sends a transmission burst to the NOC 109 - alternatively, the transmission burst can be sent to a designated terminal outside of the NOC 109.

According to one embodiment of the present invention, the terminal, as described in FIG. 2, has a transceiver 201, notably the IRU 201a, with the functionality to measure the current receive signal strength in terms of a signal quality factor (SQF) - e.g., a signal-to-noise ratio (E_{b}/Nₒ). As a result, the ITU 201b of the transceiver 201 may adjust the power of the transmission in response to the IRU 201a. The IRU 201a, in an exemplary embodiment, provides the SQF when the terminal transmits packets to the NOC 109. This information may be provided as part of "adaptation/header" information, which may coexist with the data that a site (or terminal) would normally be transmitting. The closed-loop control process allows for a real-time adjustment of timing and power both at the NOC 109, and at the terminal without suspending or interrupting data transmission by the host 113 (FIG. 2).

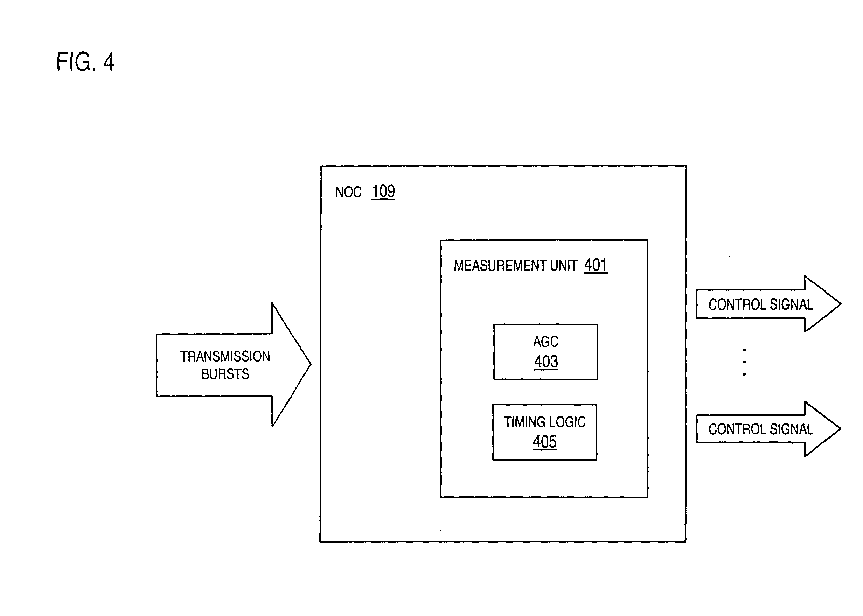

FIG. 4 shows a diagram of a hub station (e.g., NOC 109) for supporting dynamic power and timing validation in the system, in accordance with an embodiment of the present invention. Upon receipt of the transmission burst, the NOC 109 determines the timing and the power level of the burst, as in step 303. The burst contains a unique word (UW) to aid in detection of the start and end of the transmission burst. The timing, according to one embodiment of the present invention, is measured as an offset value. Specifically, the difference between the center of the aperture associated with an expected (or estimated) the end of a unique word and the actual end of the unique word within the aperture is determined, resulting in a timing offset value. The power level may be measured and expressed in terms of a signal-to-noise ratio value.

The NOC 109, in accordance with an embodiment of the present invention, contains a measurement unit 401 equipment (e.g., a hub manufactured by Aurora) that provides measurement information on every received burst from the terminal 101. The measurement unit 401 includes automatic gain control (AGC) circuitry 403 and timing logic 405. The measurement unit 401 measures the receive signal strength (E_{b}/Nₒ) of each burst from each terminal within the system 100 using the AGC circuitry 403. The AGC circuitry 403 triggers on a unique word contained within the transmission burst, as to measure the signal level until the end of the burst. The timing logic 405 tracks the time when each burst is received.

The measurement unit 401 identifies the site (i.e., terminal) that sent the burst, and thus, provides a number of signal quality measurements. The measurement unit 401 measures the received SQF at various sites to determine whether inferior system performance is attributable to NOC degradation or site degradation. The measurement unit 401 also measures the received E_{b}/Nₒ for a terminal, thereby enabling the NOC 109 to provide feedback to the terminal if the power needs adjustment. The determined timing offset value is employed to account, in part, for drift of the satellite 101.

In step 305, the NOC 109 then creates a message that specifies the determined power level and timing offset value, thereby providing a control signal for the terminal to adjust, as necessary, the timing and the power level to adapt to varying channel conditions. The message is transmitted by the NOC 109 to the terminal. Accordingly, the terminal as well as the NOC 109 possesses the capability to adjust transmit power to counteract, for example, unfavorable temporary weather conditions and other conditions that may cause a site or system outage in a conventional system. The timing of the terminal similarly be adjusted for satellite drift.

In step 309, the terminal checks whether the timing and the power level that are specified in the received message require corresponding timing and power adjustment in the terminal. For example, if the power margin is proper, then the process ends; however, if the power margin is not proper (i.e., inadequate power margin or too much power margin), then the terminal adjusts the power level accordingly. The measurement unit 401 may periodically provide the transmit power adjustment value to each terminal to allow the terminal to locally determine if and when to adjust the transmit power; this capability exists because the measurement unit 401 receives the power level with each burst. If the measurement unit 401 measures low power for some terminals on an inroute (lower than other terminals), then the measurement unit 401 may provide information to allow the terminals with the weaker power to transmit more power.

Under the above approach, an operator within the NOC 109 need not be tasked to determine the necessary power level adjustments and timing. Additionally, the terminals do not require expensive, specialized electronics. Further, the present invention advantageously enhances system availability, even in poor weather conditions.

FIG. 5 is a diagram of an inroute timing and power loop executed by the satellite terminal of FIG. 2. The transceiver 201 provides a high-speed, over the air return channel to the conventional low speed terrestrial backhaul. The ITU 201b (i.e., transmitter) operates with and is controlled by the IRU 201a (i.e., receiver). According to one embodiment of the present invention, the transmitter 201b is implemented entirely as firmware controlled hardware. The architecture of the transceiver 201, in which no CPU with embedded software running on the transmitter 201b, advantageously provides significant cost savings.

In this example, the IRU 201a includes a demodulator (DEMOD) 501 for demodulating the control signal from the NOC 109, and a processor 503 for extracting timing and power information from the demodulated control signal. The processor (CPU) 503, in response, generates timing adjustment and power adjustment signals to the ITU 201b. The transmitter 201b, in an exemplary embodiment, is considered a peripheral to the CPU. Configuration parameters and inbound data from the CPU 503 are input to a serial interface (not shown).

In particular, the timing adjustment signal and the power adjustment signal are forwarded to an inroute timer 507 and an inroute processing block 509, respectively. The inroute timer 507 provides the control necessary for varying the length of the inroute frame, using a counter clock. At each terminal, the counter is pre-loaded with a value using an inroute frame register (not shown). The processor 503 periodically updates the inroute frame register to ensure frame synchronization. The counter terminal count is output as an "Inroute Frame Interrupt," which is passed to the IRU 201a via, for example, a serial interface.

The inroute processing block 509 provides control of a modulator 511 to adjust for power and timing based on the frame synchronization information from the inroute timer 507 and the power adjustment signal from the processor 503. The modulator 511, according to an embodiment of the present invention, is an Offset Quadrature Phase Shift Keying (O-QPSK) modulator utilizing several cascaded filters (not shown).

The ITU 201b supports a variety of transmission functions, such as modulating and transmitting, in burst mode, the in-bound carrier to the NOC 109. The ITU 201b includes a Frequency Lock Loop (FLL) 513, and a Phase Lock Loop (PLL) 515, which are supported by two different oscillators 517, 519 with different clock rates (e.g., 10MHz and 32.768MHz). The FLL 513 corrects for frequency drift in the transmitter 10 MHz RF (Radio Frequency) time base. The VCXO 517 is a 10.000 MHz low noise a Temperature Compensated Voltage Controlled Crystal Oscillator (TC-VCXO) with a Transistor-Transistor Logic (TTL) compatible output. The 10 MHz VC-TCXO frequency accuracy is accomplished by frequency locking with the recovered clock from outbound carrier of the receiver 20 1a.

The 10 MHz VC-TCXO frequency accuracy is accomplished by frequency locking with the outbound carrier recovered symbol clock. The recovered symbol clock is passed from the receiver 201 a to the transmitter 201b via the serial interface.

The inroute processing block 509 provides a number functions with respect to sending data over the return channel. The block 509 reads data from an inroute data buffer (not shown), and performs the channel coding functions on the inroute data. The inroute processing block 509 also multiplexes Unique Word (UW) data with predetermined headers and trailers into a serial bit stream. The inroute processing block 509 further generates the control/timing signals to the modulator 511 in addition to the inroute data.

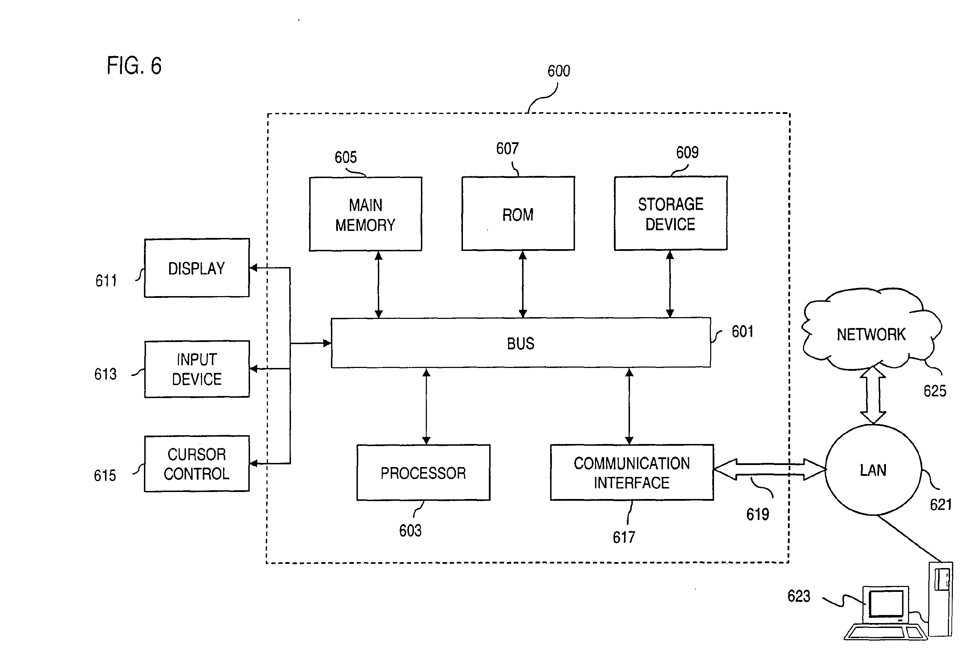

FIG. 6 is a diagram of a computer system that is capable of supporting dynamic verification and validation of timing and power of the satellite terminals, according to an embodiment of the present invention. The computer system 600 includes a bus 601 or other communication mechanism for communicating information and a processor 603 coupled to the bus 601 for processing information. The computer system 600 also includes main memory 605, such as a random access memory (RAM) or other dynamic storage device, coupled to the bus 601 for storing information and instructions to be executed by the processor 603. Main memory 605 can also be used for storing temporary variables or other intermediate information during execution of instructions by the processor 603. The computer system 600 may further include a read only memory (ROM) 607 or other static storage device coupled to the bus 601 for storing static information and instructions for the processor 603. A storage device 609, such as a magnetic disk or optical disk, is coupled to the bus 601 for persistently storing information and instructions.

The computer system 600 may be coupled via the bus 601 to a display 611, such as a cathode ray tube (CRT), liquid crystal display, active matrix display, or plasma display, for displaying information to a computer user. An input device 613, such as a keyboard including alphanumeric and other keys, is coupled to the bus 601 for communicating information and command selections to the processor 603. Another type of user input device is a cursor control 615, such as a mouse, a trackball, or cursor direction keys, for communicating direction information and command selections to the processor 603 and for controlling cursor movement on the display 611.

According to one embodiment of the invention, the process of FIG. 3 is implemented by the computer system 600 in response to the processor 603 executing an arrangement of instructions contained in main memory 605. Such instructions can be read into main memory 605 from another computer-readable medium, such as the storage device 609. Execution of the arrangement of instructions contained in main memory 605 causes the processor 603 to perform the process steps described herein. One or more processors in a multi-processing arrangement may also be employed to execute the instructions contained in main memory 605. In alternative embodiments, hard-wired circuitry may be used in place of or in combination with software instructions to implement the embodiment of the present invention. Thus, embodiments of the present invention are not limited to any specific combination of hardware circuitry and software.

The computer system 600 also includes a communication interface 617 coupled to bus 601. The communication interface 617 provides a two-way data communication coupling to a network link 619 connected to a local network 621. For example, the communication interface 617 may be a digital subscriber line (DSL) card or modem, an integrated services digital network (ISDN) card, a cable modem, a telephone modem, or any other communication interface to provide a data communication connection to a corresponding type of communication line. As another example, communication interface 617 may be a local area network (LAN) card (e.g. for Ethernet™ or an Asynchronous Transfer Model (ATM) network) to provide a data communication connection to a compatible LAN. Wireless links can also be implemented. In any such implementation, communication interface 617 sends and receives electrical, electromagnetic, or optical signals that carry digital data streams representing various types of information. Further, the communication interface 617 can include peripheral interface devices, such as a Universal Serial Bus (USB) interface, a PCMCIA (Personal Computer Memory Card International Association) interface, etc. Although a single communication interface 617 is depicted in FIG. 6, multiple communication interfaces can also be employed.

The network link 619 typically provides data communication through one or more networks to other data devices. For example, the network link 619 may provide a connection through local network 621 to a host computer 623, which has connectivity to a network 625 (e.g. a wide area network (WAN) or the global packet data communication network now commonly referred to as the "Internet") or to data equipment operated by a service provider. The local network 621 and the network 625 both use electrical, electromagnetic, or optical signals to convey information and instructions. The signals through the various networks and the signals on the network link 619 and through the communication interface 617, which communicate digital data with the computer system 600, are exemplary forms of carrier waves bearing the information and instructions.

The computer system 600 can send messages and receive data, including program code, through the network(s), the network link 619, and the communication interface 617. In the Internet example, a server (not shown) might transmit requested code belonging to an application program for implementing an embodiment of the present invention through the network 625, the local network 621 and the communication interface 617. The processor 603 may execute the transmitted code while being received and/or store the code in the storage device 609, or other non-volatile storage for later execution. In this manner, the computer system 600 may obtain application code in the form of a carrier wave.

The term "computer-readable medium" as used herein refers to any medium that participates in providing instructions to the processor 603 for execution. Such a medium may take many forms, including but not limited to non-volatile media, volatile media, and transmission media. Non-volatile media include, for example, optical or magnetic disks, such as the storage device 609. Volatile media include dynamic memory, such as main memory 605. Transmission media include coaxial cables, copper wire and fiber optics, including the wires that comprise the bus 601. Transmission media can also take the form of acoustic, optical, or electromagnetic waves, such as those generated during radio frequency (RF) and infrared (IR) data communications. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, and EPROM, a FLASH-EPROM, any other memory chip or cartridge, a carrier wave, or any other medium from which a computer can read.

Various forms of computer-readable media may be involved in providing instructions to a processor for execution. For example, the instructions for carrying out at least part of the present invention may initially be borne on a magnetic disk of a remote computer. In such a scenario, the remote computer loads the instructions into main memory and sends the instructions over a telephone line using a modem. A modem of a local computer system receives the data on the telephone line and uses an infrared transmitter to convert the data to an infrared signal and transmit the infrared signal to a portable computing device, such as a personal digital assistant (PDA) or a laptop. An infrared detector on the portable computing device receives the information and instructions borne by the infrared signal and places the data on a bus. The bus conveys the data to main memory, from which a processor retrieves and executes the instructions. The instructions received by main memory can optionally be stored on storage device either before or after execution by processor.

Accordingly, an approach is provided for automatically adjusting timing and power levels of satellite terminals 103, 105, 107 in a two-way satellite communication system 100. The satellite terminals 103, 105, 107 transmit bursts to a hub station 109 over a return channel. The hub station 109 (e.g., NOC) receives the transmission bursts and determines timing and power levels of the corresponding satellite terminals 103, 105, 107 based on these received bursts. The hub station 109 automatically generate control messages to the satellite terminal 103, 105, 107 for selective adjustment of the timing to account for satellite drift and power level for compensating for varying weather conditions. The above arrangement advantageously enhances efficient use of system resources and increases system availability.

While the present invention has been described in connection with a number of embodiments and implementations, the present invention is not so limited but covers various obvious modifications and equivalent arrangements, which fall within the purview of the appended claims.

## Claims

1. A method for providing timing validation of a satellite terminal (103, 105, 107) in a two-way satellite network (100), the method comprising:
receiving a transmission burst from the satellite terminal (103, 105, 107) during normal operation via a return channel over the network (100);
dynamically determining a timing offset value; and
generating a control signal instructing the satellite terminal (103, 105, 107) to adjust for timing based on the determined timing offset value.

2. A method according to claim 1, further comprising:
detecting a start point of the transmission burst; and
measuring power level of the transmission burst until an end point of the transmission burst.

3. A method according to claim 1, further comprising:
transmitting the control signal to the satellite terminal (103, 105, 107) for adjustment of timing to account for satellite drift.

4. A method according to claim 1, wherein the satellite terminal (103, 105, 107) is mobile within the network (100), the timing of the satellite terminal (103, 105, 107) being selectively readjusted in response to movement of the satellite terminal (103, 105, 107).

5. A hub station for providing timing validation of a satellite terminal (103, 105, 107) in a two-way satellite network (100), the hub station comprising:
a receiver (201a) configured to receive a transmission burst from the satellite terminal (103, 105, 107) during normal operation via a return channel over the network (100); and
timing logic (405) configured to dynamically determine a timing offset value, wherein a control signal is generated for instructing the satellite terminal (103, 105, 107) to adjust for timing based on the determined timing offset value.

6. A hub station according to claim 5, further comprising:
automatic gain circuitry (403) configured to detect a start point of the transmission burst and to measure power level of the transmission burst until an end point of the transmission burst.

7. A hub station according to claim 5, wherein the satellite terminal (103, 105, 107) adjusts timing in response to the received control signal, the timing of the satellite terminal (103, 105, 107) being selectively readjusted in response to movement of the satellite terminal (103, 105, 107).

8. A hub station according to claim 5, wherein the satellite terminal (103, 105, 107) is mobile within the network (100), the timing of the satellite terminal (103, 105, 107) being selectively readjusted in response to movement of the satellite terminal (103, 105, 107).

9. A system for supporting dynamic timing validation in a two-way satellite network (100) including a satellite terminal (103, 105, 107), the system comprising:
means for receiving a transmission burst from the satellite terminal (103, 105, 107) within the two-way satellite network (100) over a return channel, wherein the satellite terminal (103, 105, 107) is under a normal operational mode;
means for dynamically determining a timing offset value to account for satellite drift; and
means for generating a control signal instructing the satellite terminal (103, 105, 107) to adjust for timing based on the determined timing offset value.

10. A system according to claim 9, further comprising:
means for detecting a start point of the transmission burst;
means for measuring power level of the transmission burst until an end point of the transmission burst; and
means for transmitting the control signal to the satellite terminal (103, 105, 107) for adjustment of timing to account for satellite drift.
